# EUROPEAN PATENT SPECIFICATION

(11) **EP 1 833 298 B1**
(45) Date of publication and mention of the grant of the patent: **08.05.2013**
(21) Application number: 05815754.6
(22) Date of filing: 16.12.2005
(51) Int. Cl.: A01N 37/12, A01N 25/04, A23B 4/20, C02F 1/50, A23L 1/00, A23L 3/34, C11D 3/20, C11D 3/48

(54) **STABLE CONCENTRATED ANTI-BACTERIAL EMULSIONS OF MONOCAPRIN IN WATER**
STABILE KONZENTRIERTE ANTIBAKTERIELLE EMULSIONEN VON MONOCAPRIN IN WASSER
EMULSIONS ANTI-BACTERIENNES CONCENTREES STABLES DE MONOCAPRINE DANS DE L'EAU

(30) Priority: 17.12.2004 IS 7603
(43) Date of publication of application: 19.09.2007
(73) Proprietor: Thormar, Halldor, 108 Reykjavik (IS); Hilmarsson, Hilmar, 112 Reykjavik (IS); Bergsson, Gudmundur, 111 Reykjavik (IS)
(72) Inventor: Thormar, Halldor, 108 Reykjavik (IS); Hilmarsson, Hilmar, 112 Reykjavik (IS); Bergsson, Gudmundur, 111 Reykjavik (IS)
(74) Representative: Arnason Faktor
(86) International application number: PCT/IS2005/000026
(87) International publication number: WO 2006/064520

(56) References cited:
- EP-A- 0 131 393
- EP-A- 0 273 606
- EP-A- 0 818 143
- WO-A-01/43549
- WO-A-90/15601
- WO-A-94/08604
- US-B1- 6 596 763
- GUDMUNDUR BERGSSON ET AL.: "Bactericidal effects of fatty acids and monoglycerides on Helicobacter pylori" ANTIMICROBIAL AGENTS, vol. 20, 2002, pages 258-262, XP002379549
- GUDMUNDUR BERGSSON ET AL.: "In vitro inactivation of Chlamydia trachomatis in fatty acids and monoglycerides" ANTIMICROBIAL AGENTS AND CHEMOTHERAPY, vol. 42, no. 9, 1998, pages 2290-2294, XP002379550
- THORDIS KRISTMUNDSDOTTIR ET AL.: "Development and evaluation of microbial hydrogels containing monoglyceride as the active ingredient" JOURNAL OF PHARMACEUTICAL SCIENCES, vol. 88, no. 10, 1999, pages 1011-1015, XP002379551
- DATABASE CAPLUS [Online] CHEMICAL ABSTRACTS SERVICE, COLUMBUS, OHIO, US; FURUTA, TARO ET AL: "Combined effects of various food additives on the bactericidal activity of ethanol against Escherichia coli and Staphylococcus aureus" XP002379554 retrieved from STN Database accession no. 1984:437309 & BOKIN BOBAI , 12(2), 65-72 CODEN: BOBODP; ISSN: 0385-5201, 1984,
- HASSELBACH F ET AL: "MICROPROCESSOR-AIDED REMOULDING OF FIELD EMITTERS" JOURNAL OF PHYSICS E. SCIENTIFIC INSTRUMENTS, IOP PUBLISHING, BRISTOL, GB, vol. 17, no. 9, September 1984 (1984-09), pages 782-787, XP002027775 ISSN: 0022-3735
- THORGEIRSDOTTIR T O ET AL: "Viscoelastic and structural properties of pharmaceutical hydrogels containing monocaprin" EUROPEAN JOURNAL OF PHARMACEUTICS AND BIOPHARMACEUTICS, ELSEVIER SCIENCE PUBLISHERS B.V., AMSTERDAM, NL, vol. 59, no. 2, February 2005 (2005-02), pages 333-342, XP004719605 ISSN: 0939-6411

## Description

### FIELD OF THE INVENTION

This invention relates to a method of manufacturing concentrated oil-in-water emulsions of 1-monoglyceride of capric acid (monocaprin or glycerol monocaprate) which are stable at room temperature for at least one year and are specifically designed to rapidly kill foodborne pathogenic and spoilage bacteria in up to 200-fold dilution of the concentrates in water. The diluted microbicidal emulsions are preferably intended to be used 1) as disinfectants to reduce the number of foodborne pathogenic bacteria, such as *Campylobacter* spp, in contaminated drinking water with the aim of preventing spread of the bacteria to healthy animals, particularly chickens; 2) as additives to drinking water and feed of infected animals, particularly chickens, to reduce the number of pathogenic bacteria, such as *Campylobacter* spp., in their intestines; 3) as disinfectants to reduce the number of foodborne pathogenic bacteria in contaminated food, such as raw poultry, with the aim of making the food safer for human consumption; 4) to disinfect surfaces contaminated with foodborne bacteria to counteract spread of the bacteria to humans by contact with the contaminated surfaces; 5) for treatment of carcasses in the slaughterhouse, particularly of poultry, or of other raw meat and fish to reduce the growth of spoilage bacteria and to extend the shelf life of the product.

### BACKGROUND OF THE INVENTION

*Campylobacter jejuni* is the most common cause of foodborne infection. There is an estimated 2.1 to 2.4 million cases of human campylobacteriosis each year in the U.S. and C. *jejuni* causes 46% of all laboratory-confirmed cases of bacterial gastroenteritis. It is followed in prevalence by *Salmonella* (28%), *Shigella* (17%) and *Escherichia coli* 0157 (5%) infections. (Altekruse S.F. et al., Campylobacter jejuni-An emerging foodborne pathogen. Emerging Infectious Diseases Vol 5, Nr.1, Jan-Mar 1999). *Campylobacter* infections are common worldwide, both in developed and developing countries.

*Campylobacter* are Gram-negative, spiral-shaped microaerophilic bacteria which are found in many foods of animal origin. Both wild and domestic animals are infected with *C. jejuni,* such as chickens. The animals carry the bacteria in their intestines but do not normally show signs of illness. In flocks of chickens, *C*. *jejuni* is easily spread from bird to bird through a common water source or through contact with infected feces. At slaughter, *Campylobacter* can be spread from the intestines to the carcasses, and bacterial counts increase greatly during defeathering and evisceration. More than half of the raw chickens on the U.S. market have *Campylobacter* on the skin. *Campylobacter* are transferred to humans by handling of raw meat, particularly raw poultry, and by eating undercooked poultry. A very small number of *Campylobacter* organisms, or fewer than 500, can cause illness in humans but the rate of infection increases with the infected dose. *C. jeuni* infection in humans causes fever, cramps and diarrhea, which is frequently bloody. Less frequently, the infection leads to bacteremia, septic arthritis and other extraintestinal symptoms. Drug-resistant strains of *C. jejuni* have emerged, most frequently after the use of fluoroquinolone in poultry was permitted in the U.S. and Europe. The rate of drug-resistant enteric infections is highest in the developing countries where the use of antimicrobial drugs in humans and animals is common.

Because of the high rate of diarrheal illness caused worldwide by foodborne bacteria and the severity of the infections, both in human suffering and economic loss, it is important to develop means to control transmission of the bacteria from food, such as poultry, to humans. One approach is to prevent infection in broiler chickens by eliminating *Campylobacter* or *Salmonella* from their drinking water by addition of chemicals such as chlorine (White P.L., Baker A.R. and James W.O. Strategies to control salmonella and campylobacter in raw poultry products. Rev. Sci.Tech. Off. Int. Epiz. 16, 525-541, 1997) or organic acids at low pH. Another approach is to reduce the level of bacterial colonisation in the intestinal tract of broilers by addition of chemicals to their feeds (Engel L.B., Urlings H.A.P., Wagenaar J.A., van Knapen F. Effect of acidified feed on susceptibility of broiler chickens to intestinal infection by Campylobacter and Salmonella. Vet. Microbiol. 99:259-267, 2004). Many attempts have been made to treat contaminated poultry carcasses in the slaughterhouse with antibacterial chemicals, A number of compounds have been used for this purpose with varying success, for example trisodium phosphate, a mixture of formic, acetic and propionic acids at low pH, chlorine, and electrolyzed water (Slavik M.F. et al. Effect of trisodium phosphate on campylobacter attached to post-chill chickens. J.Food Prot.57, 324-326, 1994; Rathgeber B.M. and Waldroup A.L. Antibacterial activity of a sodium acid pyrophosphate product In chiller water against selected bacteria on broiler carcasses. J. Food Prot. 58, 530-534, 1995); In spite of all efforts, contamination of raw poultry and related food products remains a serious health problem. New and more efficient methods to decontaminate or prevent contamination of food such as raw meat and poultry by pathogens such as *Campylobacter, Salmonella* and E. *coli* would therefore be desirable.

The critical event in the spread of foodborne pathogens to humans occurs in the kitchen when contaminated food is prepared for cooking. Several studies have been done on the effectiveness of common dishwashing soaps and detergents to decontaminate cutting boards and utensils and other contact surfaces (Scott E. et al. Evaluation of disinfectants in the domestic environment under "in use" conditions. J. Hyg. Camb. 92, 193-203, 1984; Cogan T.A. et al. The effectiveness of hygiene procedures for prevention of cross-contamination from chicken carcasses in the domestic kitchen. Letters Appl. Microbiol. 29, 354-358, 1999). These studies showed only limited reduction in bacterial counts. Better results were obtained with chemical disinfectants such as antiseptic gels (Zhao P. et al. Development of a model for evaluation of microbial cross-contamination in the kitchen. J. Food Prot. 61, 960-963, 1998). However, there is a need for alternative kitchen disinfectants derived from natural sources.

Numerous chemical preservatives have been used to retard the growth of spoilage microorganisms on meats and other foodstuffs to extend their shelf-life (Hwang C-A. and Beuchat L. Efficacy of selected chemicals for killing pathogenic and spoilage micro-organisms on chicken skin. J. Food Prot. 58, 19-23, 1995; Ouattara B. et al. Antibacterial activity of selected fatty acids and essential oils against six meat spoilage organisms. Int. J. Food Microbiol. 37, 155-162, 1997). However, the number of chemical compounds permissible for this purpose is limited due to a possible toxicity and to environmental considerations. It would therefore be desirable to develop a food-grade natural product with proven effectiveness as a food preservative.

Microbicidal activities of fatty acids and their 1-monoglycerides have been tested against a number of bacterial species. (Thormar H. and Bergsson G., Antimicrobial effects of lipids. Recent Devel. Antiviral Res. 1, 157-173, 2001.) Thus, Gram-negative bacteria were found to be rapidly killed by several lipids, both fatty acids and monoglycerides, although with a considerable difference in activity profiles. All bacterial species tested, either Gram-negative or Gram-positive, were found to be particularly susceptible to monocaprin (glycerol monocaprate) which is a 1-monoglyceride of capric acid (Bergsson G., Steingrimsson Ó. and Thormar H. Bactericidal effects of fatty acids and monoglycerides on Helicobacter pylori. Int. J. Antimicrob. Agents 20, 258-262, 2002). Medium-chain fatty acids and their monoglycerides, such as. monocaprin, are breakdown products of triglycerides which are common in various fats, both from animals, for example in milk, and from plants, such as in coconut oil. They are harmless to the body in concentrations which kill viruses and bacteria, for example in the stomach, and are classified as GRAS (generally recognized as safe) by the U.S. Food and Drug Administration (FDA) (Code of Federal Regulations, 1999. Title 21, Vol. 3, Part 184, Sec. 184.1505, p. 505. U.S. Government Printing Office). They are approved as food additives by the EU (E471). Of 11 lipids tested monocaprin was found to be the most microbicidal against C. *jejuni,* reducing the viable bacterial count by more than 6 log₁₀ upon contact for one minute (Thormar H., Hilmarsson H., and Bergsson G. Stable concentrated emulsions of 1-monoglyceride of capric acid (monocaprin) with microbicidal activities against *Campylobacter, Salmonella* and *Escherichia coli.* Unpublished manuscript, 2005). Monocaprin was therefore considered promising as a potential disinfectant of these foodborne bacteria.

The microbicidal activities of lipids and their potential application for killing microorganisms are described in U.S. patents No. 4,997,851 and 5,434,182. Their application for disinfecting contact lenses is described in U.S. patent No. 5,624,958 and their application for counteracting sexually transmitted infections is described in PCT international application No. WO98/20872, and corresponding U.S. patent No. 6,596,763 B1.

This latter document (US 6,596,763 B1) describes in particular hydrogels, and examples (e.g. Example 1) where the microbicidal activity of monocaprin is tested after diluting in water. These diluted test solutions are vortexed just prior to being tested, before the turbid mixtures undergo phase separation.

### SUMMARY OF THE INVENTION

According to the present invention It has been determined that monocaprin solubilised in a suitable water-miscible solvent can be dispersed In water In such a way that It forms lipid-in-water emulsions which are surprisingly stable and remain strongly microbicidal for at least 12 months, either undiluted or after being diluted up to 200-fold in water or an aqueous solution, e.g. an acidified solution. The emulsions are equally stable and microbicidal whether or not they contain small amounts of an emulsifying agent, such as a polyoxyethylene sorbitan fatty acid ester (polysorbate), In addition to the microbicidal lipid. Lipid-in-water emulsions of the invention containing monocaprin as the microbicidal agent are shown to kill *Campylobacter* surprisingly fast and In large numbers in contaminated water, where the viable bacterial count Is reduced by more than one million-fold In 1 minute. Monocaprin emulsions 1) can be added to drinking water of poultry (e.g. chickens) in concentrations which disinfect the water and prevent *C. jejuni* infection and do not have adverse effect on the animals, 2) reduce significantly the bacterial counts In cloacal swabs and feces of *Campylobacter* Infected poultry when added to their drinking water and feed, 3) reduce significantly the bacterial counts on *Campylobacter* contaminated surfaces such as on the skin of raw poultry and on cutting boards and utensils In the kitchen, 4) maintain their bactericidal activity against *Campylobacter* In mixtures with commercial liquid soap, such as washing-up liquids. 5) kill *Salmonella* and *E. coli* in water at pH 5 or lower and 6) significantly reduce the growth of spoilage microorganisms on parts of poultry carcasses and other meat pieces upon storage and thereby extend their shelf-life.

### BRIEF DESCRIPTION OF FIGURES

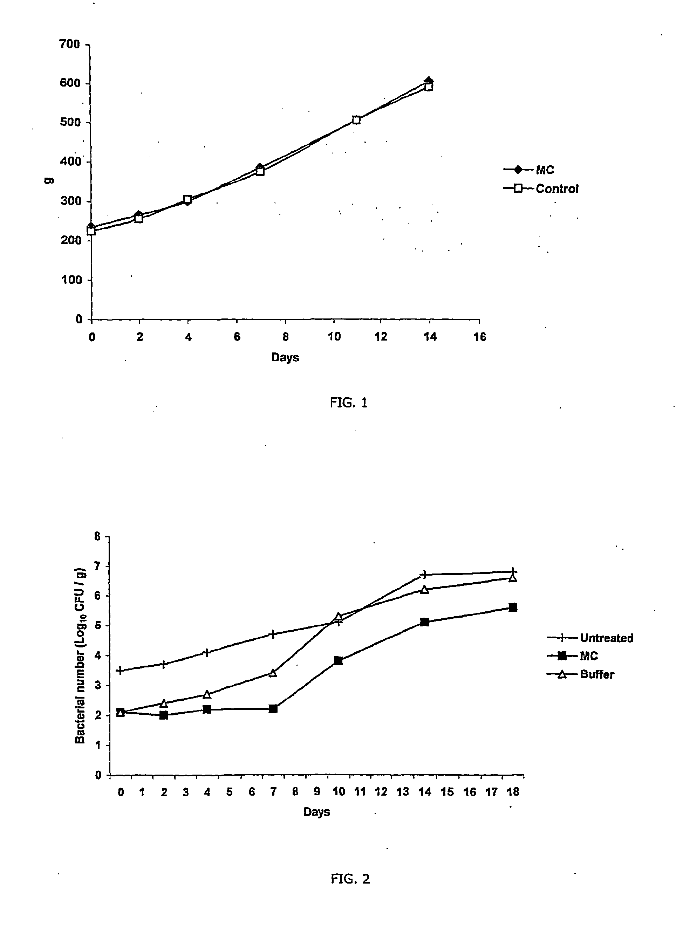

Fig 1. Results from Example 4: Mean weight In grams of a group of 5 chickens treated with an emulsion of 5 mM MC and 0.02% PS40 In drinking water and feeds for 12 days compared with a group of 5 untreated controls. The chickens were received at 10 days of age and the MC treatment was started on day 2.
Fig 2. From Example 9: Total aerobic bacteria counts on chicken legs refrigerated for 18 days after routine packaging. The legs were either packaged untreated In the usual way or after being dipped for 5 min: (1) Into an emulsion of 5 mM (0.12%) monocaprin, (MC) and 0.02% PS40 diluted In citrate lactate buffer at pH 4.1 (filled squares), or (2) into buffer alone (triangles). Each point represents bacterial count per g for 3 legs.

### DETAILED DESCRIPTION OF THE INVENTION

The term "microbicidal" is used herein to designate a compound which Is capable of killing viruses and/or bacteria so that they are no longer able to perform basic functions of life such as replication. The term "emulsion" used herein means droplets and/or micelles of a lipid dispersed In a solvent (e.g. water or a mixture of water and a water-miscible solvent which Is the case here) In such a way that the discontinuous phase (the lipid) does not separate from the continuous phase (the water or solvent mixture) even after storage at room temperature. Emulsions that remain essentially homogeneously dispersed for many months are referred to as "stable emulsions". The term "emulsifying agent" means a compound which is capable of keeping lipids in a stable emulsion In water over a certain period of time. The term "lipid-*in*-*water* emulsion' as used herein is to be understood as Including aqueous mixtures with 2 to 30% vol/vol of ethanol. According to the invention, stable lipid-in-water emulsions have been formulated which kill *Campylobacter* In large numbers (>6 log₁₀ colony forming units) upon contact for 1 min. The emulsions contain monocaprin as the active Ingredient. Monocaprin is a 1-monoglycerlde of capric add, which is a 10-carbon saturated fatty add. Monocaprin has been found by previous work to be very active In killing a broad spectrum of bacteria and viruses and has been shown to be extremely active In killing C. *jejuni.* If prepared according to the methods described In Example 1, concentrated emulsions of monocaprin In water are stable at room temperature for up to 12 months and are active against C. *jejuni* after up to 1:200 dilution In water. The concentrated emulsions have a monocaprin concentration In the range of about 50 to 300 mM, preferably In the range of about 100-300 mM, Including the range of about 150 to 300 mM, such as In the range of about 200-300 mM. It Is a part of the Invention to optionally use emulsifying agents to help keep monocaprin In a stable emulsion in water. It Is preferred to use polyoxyethylene sorbitan fatty add esters (which are also referred to as polysorbates) as emulsifying agents. Polysorbates are nonlonic surfactants which are commonly used in the food Industry as oil-in-water emulsifying agents In concentrations varying from 0.1 to 1.0 percent (w/w). They are also widely used in oral, parenteral and topical pharmaceutical formulations as well as in cosmetics and are generally regarded as non-toxic and non-irritant materials. The World Health Organization has set an estimated acceptable daily Intake for polysorbates 20, 40, 60, 65 and 80, calculated as total polysorbate esters, at up to 25 mg/kg body-weight (FAO/WHO. Toxicological evaluation of certain food additives with a review of general principles and of specifications: seventeenth report of the joint FAO/WHO expert committee on food additives. Tech Rep Ser World Health Org 1974; No. 539). Polysorbates 20, 40, 60, 65 and 80 are accepted as food additives In Europe (E432-E436). It is within the scope of the invention to use polysorbates selected from the above groups 20, 40, 60, 65 and 80 as emulsifying agents to help keep Monocaprin in a stable emulsion In water. It is also within the scope of the invention to use a combination of emulsifying agents to increase the stability and/or durability of monocaprin emulsions, without reducing the microbicidal activity of monocaprin.

The following is a detailed description of a preferred embodiment of the manufacture of a concentrated monocaprin-in water emulsion of the invention and dilution of the concentrate to obtain active diluted microbicidal emulsions used for disinfection of *Campylobacter* and other bacteria and viruses which are susceptible to the microbicidal activity of monocaprin. Water or an aqueous solution, e.g. regular tap water, in a suitable container is heated to a temperature in the range of about 30° to 80°C, such as in the range of about 50-80°C and preferably in the range of about 50-70°C, and more preferably in the range of 60° to 70°C, and a solution of monocaprin in a concentration range such as 0.25 -2.5 M, and preferably in the range 0.5-2.5 M or in the range of 1.0-2.0 M, such as preferably 0.5 or 1.0 M, in ethanol, is slowly added to the water under forceful stirring to make an emulsion of a final monocaprin concentration 50 mM to 300 mM. Consequently, depending on the initial concentration of the monocaprin solubilised in solvent within the above preferred range of about 0.25-2.5 M the concentration of ethanol in the concentrated emulsion will be in the range of 1-30% (vol/vol) in order to obtain a desired monocaprin concentration. Preferably the amount of the solvent is in the range of about 2.5-30%, such as in the range of about 2.5-20%, including about 5%, about 10%, about 15% or about 20%. The emulsion is slowly cooled to room temperature (generally in the range of 20-27°C) at which it becomes clear. The emulsions remain clear for at least 12 months at room temperature and are fully microbicidal, for example kill >6 log₁₀ colony forming units (CFU) of C. *jejuni,* after dilution in tap water to a concentration as low as 1 mM (0.025%) and are preferably diluted to a concentration in the range of about 1-20 mM and more preferably the range of 1-10 mM, such as for example 1, 2, 5 or 10 mM, depending on the intended application and how rapidly the diluted emulsions should act. The dilution is preferably performed at room temperature in a suitable container with brief stirring. The diluted emulsions remain stable and fully microbicidal for several months at room temperature. Generally, the diluted emulsions will contain in the range of about 0.04-1.5% vol/vol of ethanol and preferably in the range of about 0.04-0.2% such as in the range of about 0.04-0.1%, e.g. about 0.05%, 0.08% or 0.1%, or in the range of about 0.1-1.0%, such as e.g. 0.2%, 0.4% or 0.5%. The suitable ethanol amount depends on the application, if for example the diluted emulsion is to be used as drinking liquid a low ethanol concentration is clearly advantageous while this is not critical when the diluted emulsion are used for cleaning or rinsing. A polysorbate can be added to the concentrated monocaprin-in-water emulsion, such as to a concentration of at least 2% (v/v). The polysorbate concentration is not critical as long as it is under the limit allowable in food products after final dilution of the concentrate. The polysorbate is added to the concentrated monocaprin-in water emulsion under brief stirring and preferably at a temperature ranging from room temperature to about 70°C, but more preferably at about 30°C. A concentrated emulsion with polysorbate is diluted to the desired concentration in the same way as emulsions without polysorbate. Optionally, polysorbate can be added to a monocaprin-in-water emulsion which has already been diluted in tap water. It is within the scope of the invention to dilute concentrated monocaprin-in-water emulsions in water which has been acidified to pH lower than about 5.5 and preferably lower than 5, by adding a suitable buffer to the water, preferably citrate lactate buffer, thereby increasing the microbicidal activity of the diluted monocaprin emulsions against bacteria such as *Salmonella* and *E. coli* (see Example 2). Alternatively, the diluted emulsion can be acidified after dilution by addition of a buffering agent.

According to the invention, monocaprin emulsions, optionally containing at least one additional emulsifying agent acceptable as a food additive, may be used for disinfection of foodborne and waterborne pathogens which can cause gastroenteritis in humans and other animals, specifically *Campylobacter* species. Examples of situations or environment in which such pathogens could be eliminated or their numbers reduced include contaminated drinking water, for example the drinking water of poultry such as chickens (see Example 3), feces-contaminated surfaces in poultry farms, contaminated carcasses in slaughterhouses where whole carcasses or parts of carcasses, for example of poultry such as chickens or ducks, can be submerged in a microbicidal monocaprin emulsion (see Examples 5 and 6) or be passed through a spraying device covering the carcass with the emulsion before it is packaged for marketing. It is also within the scope of the invention to use emulsions diluted in buffer at pH below 5.5 and more preferably below pH 5 to reduce the number of spoilage microorganisms on carcasses or parts thereof with the aim of extending the shelf-life of the product (see Example 9).

Further examples of utilization of the invention include killing of foodborne pathogens in the kitchen, in food processing plants and food preparation sites (restaurants, food manufacturing sites, etc.) where contaminated surfaces can be rinsed with the diluted monocaprin emulsions (see Example 7). Rinsing devices such as spraying cans containing monocaprin emulsions can be used to disinfect utensils, cutting boards, sinks, etc., at risk of being contaminated with foodborne bacteria. Another aspect of the invention is the use of monocaprin emulsions as an additive to drinking water and feed of animals infected with intestinal bacteria, such as *Campylobacter,* with the aim of reducing the number of bacteria in intestinal mucosa and in feces and thereby lower the risk of contaminating the carcasses during processing (see Example 4). This utilization could be extended to treatment of other bacterial or protozoan infections in the digestive tract of animals as well as in humans, such as infection with *Helicobacter pylori.* As the accompanying examples show the concentrated emulsions of the invention can be diluted to about 1 mM and used as drinking liquid for animals. The monocaprin concentration in the drinking water is preferably in the range of about 1-10 mM and more preferably in the range of about 1-5 mM, such as about 1 mM or 2 mM. A higher concentration may be necessary to obtain a desired effect when adding the emulsion to feed, e.g. in the range of about 5-10 mmol monocaprin per kg of feed, such as about 5 mM or about 10 mM, or even higher such as in the range of 5-25 mmol per kg, e.g. 10, 15 or 20 mmol per kg. An important aspect of the invention is the extremely high activity of monocaprin emulsions which kill millions of pathogenic bacteria such as *Campylobacter* within 1 min. However, if lower concentrations of monocaprin are desirable, for example in drinking water, emulsions active in 1 min may be further diluted and allowed to act for a longer time, for example for 10 min or longer, In order to obtain a greater than 6 log₁₀ reduction in the viable *Campylobacter* count*.* This Is based on the finding that within certain limits there Is an inverse relationship between the concentration of a microbicidal lipid and the time it takes it to kill the bacteria.

An important aspect of the invention provides a method to prepare concentrated monocaprin emulsions in such a way that they are stable for many months at room temperature and are fully microbicidal after dilution In tap water. The same method was not found to be successful In making stable concentrates of other microbicidal lipids, either fatty acids or monoglycerides. The Inventors have provided suitable assays enabling a person skilled In the art to test the microbicidal activity of emulsions, either alone or as additives In other products, against microorganisms such as bacteria and viruses.

It is furthermore described herein to use monocaprin solutions or emulsions as disinfecting additives In detergents, such as washing-up liquids, and other household or mild Industry detergents (e.g. In food Industry such as food preparation sites, food processing sites, restaurants, etc.) as well as In cosmetic products. Thus, it has been demonstrated that concentrated solutions and emulsions of monocaprin as described above can be mixed with a variety of commercial washing-up liquid detergents of different brands rendering bactericidal activity against *Campylobacter* after dilution of the monocaprln-detergent mixture In tap water (see Example 8). This aspect of the invention provides the use of monocaprin as an anti-bacterial agent in liquid household detergents and related products. As the accompanying Example 8 Illustrates, conventional hand dishwashing detergents were shown to exhibit good anti-bacterial activity when mixed with monocaprin and diluted to common application dilution.

The invention Is illustrated with the below examples which should not be seen as limiting the general scope of the invention.

### EXAMPLES

### EXAMPLE 1. Preparation of concentrated emulsions of monocaprin (MC) In water with or without addition of polysorbate 40 (PS40)

Sterile tap water (250 ml) In a 500 ml beaker was heated to 65°C and 1 M solution of MC (Emulsifler TS-PH 003 glycerol monocaprate, pharmaceutical grade, from Danisco, Copenhagen, Denmark), In ethanol (Merck) was slowly added to the water under magnetic stirring at the highest speed to a final MC concentration of 200 mM. The cloudy emulsion was allowed to cool down at room temperature. It became clear at about 27°C and remained clear during storage at room temperature for up to 12 months. Alternatively, 10% (v/v) of polysorbate 40 (PS40) In water was added to the emulsion at 30°C under brief magnetic stirring to a final concentration of 0.8% (v/v). The emulsion became immediately clear upon addition of the polysorbate and remained clear for at least 12 months at room temperature. Concentrated MC emulsions with or without PS40 were diluted In water to the desired concentration under brief magnetic stirring and tested for microbicidal activity against *C. jejuni.* The clear concentrated emulsions became slightly cloudy upon dilution but the diluted emulsions remained stable (without precipitation of crystals) and active for many months.

The diluted emulsions were tested against *C. jejuni* in the following way: Blood agar plates were Inoculated with *Campylobacter* and Incubated for 2 days in a gas jar with a microaerobic atmosphere (gas generating kit, Campylobacter System BR 060A, Oxoid Ltd) at 37°C. Plates showing abundant bacterial growth were harvested, the bacteria collected with a cotton swab and suspended in sterile tap water. The *Campylobacter* suspension was dispensed into test tubes and mixed with an equal amount of diluted emulsion. *Campylobacter* suspensions mixed with water were used as controls. The mixtures were incubated for either 1 or 10 min at room temperature and viable *Campylobacter* were then counted by making 10-fold dilutions in sterile saline (0.9% NaCl) and streaking 10 µl of dilutions 10⁻² to 10⁻⁶ and 100 µl of dilution 10⁻¹ on blood agar plates with a pipette tip. The bacterial colonies were counted after incubation of the plates for 2 days in a microaerobic atmosphere, as described. The viable counts (log₁₀ colony forming units, CFU) of bacteria mixed with emulsion were subtracted from the bacterial count (CFU) of the water control and the difference used as a measure of microbicidal activities of the emulsion. Table 1 shows the anti-campylobacter activities of emulsions with or without polysorbate after storage for various lengths of time.

Monocaprin emulsions diluted in water have been tested and found to be active against at least 20 strains of *C. jejuni* isolated from the skin or feces of chickens, ducks and turkeys and against 10 strains isolated from patients with campylobacteriosis from various countries in Europe, Asia and Africa. Furthermore, *C**.** coli* and *C**.** lari,* 2 strains of each, were found to be susceptible to the microbicidal activity of monocaprin emulsions.

**Table 1. Anti-campylobacter activities of dilutions of concentrated monocaprin (MC) emulsions with or without polysorbate 40 (PS40) stored at room temperature for varying lengths of time.**

| concentrated emulsion | Months of storage | Concentration (mM) after dilution¹ | Reduction in bacterial count (log₁₀ CFU)² |
|---|---|---|---|
| 200 mM MC | 12 | 1.25³ | ≥6.5⁴ |
| 200 mM MC | 9.5 | 1.25 | ≥6.8⁵ |
| 200 mM MC | 9 | 1.25 | ≥6.8⁵ |
| 200 mM MC | 7.5 | 1.25 | 6.2⁵ |
| 200 mM MC | 6.5 | 1.25 | ≥6.8⁵ |
| 200 mM MC | 4.5 | 1.25 | ≥6.8⁵ |
| 200 mM MC | 1.5 | 1.25 | ≥6.2⁵ |
| 200 mM MC | 2 | 1.0⁶ | ≥6.2⁵ |
| 200mM MC/ 0.8%P40 | 27 | 1.25 /0.005%⁷ | ≥6.5⁴ |
| 200mM MC/0.8% | 17 | 1.25 /0.005% | ≥6.5⁴ |
| 200mM MC /0.8%P40 | 12.5 | 1.25/ 0.005% | ≥6.8⁵ |
| 200mM MC/0.8%PS40 | 12 | 1.25/0.005% | ≥6.5⁴ |
| 200mM MC/0.8%PS40 | 7 | 1.25/0.005% | ≥6.2⁵ |
| 200 mM MC/0.8%PS40 | 7 | 1.0/0.004%^{6,7} | ≥6.2⁴ |

| | | | |
|---|---|---|---|
| ¹ Final concentration after addition of *Campylobacter* (1:1) ² Compared with CFU (colony forming units) of *Campylobacter* mixed 1:1 with sterile tap water. ³ 160-fold dilution. 1.25 mM/0.03% MC ⁴ *Campylobacter* treated for 10 min at room temperature. ⁵ *Campylobacter* treated for 1 min at room temperature ⁶ 200- fold dilution. 1.0 mM/0.024% MC ⁷ Percent PS40 | | | |

### EXAMPLE 2. Effect of acidified emulsions of MC and PS40 on Salmonella and E. coli .

Sterile tap water was acidified by addition of citrate lactate buffer (0.06 M trisodium **citrate-lactic** acid) and adjusted to pH 5.5, 5.0, 4.5 and 4.1. A 200 mM emulsion of MC and 0.8% PS40 was diluted in the buffer to a concentration of 2.5 mM MC and 0.01% PS40, pH 4.1, 4.5, 5.0 and 5.5, or 10 mM MC and 0.04% PS40, pH 5.0 and 5.5 and incubated at 37°C for 10 minutes either with *Salmonella enteritidis* and *S. typhimurium* or with *Escherichia coli* strain 0157 and a clinical isolate of E. *coli* from a urine sample. The activities of emulsions at neutral pH without buffer were tested as controls. Decimal dilutions were inoculated onto blood agar plates and incubated in a humidified incubator at 37°C for 24 h. The reduction in viable cell count of the bacteria is shown in Table 2.

**Table 2. Antibacterial activity of emulsions of MC and PS40 at different pH against Salmonella and E. coli.**

| MC/PS40 Concentration³ | pH | Reduction of CFU log 10^{1,2} | |
|---|---|---|---|
| | | *Salmonella* spp. | *E. coli* |
| 1.25mM/0.005% | 4.1 | ≥ 7.0 ± NA | ≥ 6.7 ± NA |
| 1.25mM/0.005% | 4.5 | ≥ 7.0 ± NA | ≥ 6.7± NA |
| 1.25mM/0.005% | 5.0 | 6.60 ± 0.84 | ≥ 6.7 ± NA |
| 1.25mM/0.005%) | 5.5 | 1.90 ± 0.14 | 2.06 ± 0.07 |
| 5mM/0.02%) | 5.5 | 0.78 ± 0.63 | 2.43 ± 0.13 |
| 5mM/0,02% ⁴ | 7.2 | 0.30 ± 0.17 | 0.98 ±0.19 |
| Acid control⁶ | 4.1 | 0.13 ± 0.06 | 0/0 |

| | | | |
|---|---|---|---|
| ¹ Compared with CFU of bacteria mixed 1:1 with sterile tap water. ² Mean ± standard deviation of at least 4 determinations of 2 different strains of each bacterium. NA: not available. ³ Concentration after addition of bacteria (1:1) ⁴ In tap water without buffer. ⁵ Not done ⁶ Buffer without MC and P40 | | | |

Both *Salmonella spp* and *E*. *coli* are effectively killed by 1.25 mM MC at pH 4.1 and 4.5 but not at pH 4.1 without MC. *E. coli* is effectively killed by 1.25 mM MC at pH 5 and *Salmonella* to a smaller extent by 1.25mM and 5mM MC at pH 5. A small activity was found against *E*.*coli* at pH 5.5. There is apparently a synergistic effect of MC and acid on all of these bacteria.

### EXAMPLE 3. Elimination of C. jejuni in drinking water of chickens.

Sixteen day old broiler chickens, free of natural *Campylobacter* infection, were divided into 2 well separated groups of 5 chickens each. Each chicken in the control group was inoculated per mouth with 5 log₁₀ CFU of C. *jejuni* (isolated from chicken feces) in 100 µl of tap water. The experimental group was inoculated in the same way except that a concentrated emulsion of MC in water was added to the inoculum to a final concentration of 2.5 mM (0.06%) 10 minutes before given to the chickens. The chickens were given feed and water *ad libitum* for 8 days and were then euthanized and samples taken from the ceca for *Campylobacter* count. *Campylobacter* were not detectable in the ceca of the experimental group, whereas the chickens in the control group, which received the untreated water, were all heavily colonized with *Campylobacter,* their ceca containing 6.5 log₁₀ CFU per g. Therefore, drinking water contaminated with *C. jejuni* (6 log₁₀ CFU per ml) can be disinfected by addition of MC emulsion so that it does not cause intestinal infection of chickens.

### EXAMPLE 4. Reduction of Campylobater infection in naturally colonized broilers treated with MC emulsion in drinking water and feed.

Ten 36 day old broilers from a *Campylobacter* positive flock were received at the time of slaughter and divided into 2 groups, 5 birds in each.The following day, cloacal swabs were collected from both groups for *Campylobacter* testing and one group was then started on a treatment with 10 mM MC and 0.04% PS40 added to the drinking water and feed. The other group served as an untreated control. The treatment was continued for 3 days after which cloacal samples were collected and the birds euthanized. Table 3 shows the results from 2 experiments. An analysis by ANOVA showed that there was a significant difference in the *Campylobacter* counts for the experimental and the control groups after treatment for 3 days and a significant difference in the counts for the experimental group before and after treatment, whereas there was no difference in the counts for the control group.

A similar experiment was done where 21 day old chickens were artificially infected with *Campylobacter* by contact with inoculated birds housed in the same cage. They were given 5mM MC and 0.02% PS40 in their drinking water and feed for 10 days, beginning on day 0, and cloacal swabs were tested for *Campylobacter* every 2 to 5 days. The *Campylobacter* counts in the cloacal swabs were significantly reduced after 2-10 days of treatment (Table 4).

Adding an emulsion of 5mM MC and 0.02% PS40 to the drinking water and feed of 12-15 day old chickens for at least 12 days had no effect on their growth rate ( Fig. 1) and no abnormalities were observed in their digestive tract or liver by macro- and microscopic examination. This experiment was repeated 3 times with the same results.

**Table 3. Campylobacter counts in cloacal swabs of chickens naturally infected with Campylobacter and treated for 3 days with an emulsion of 10 mM (0.24%) MC and 0.04% P40 added to their drinking water and feed.**

| | | Viable *Campylobacter* counts (log₁₀ CFU/ml) ¹ | |
|---|---|---|---|
| Experiment | Day | Treated group | Control group |
| | 0 | 7.2 ± 0.4 | 6.6 ± 1.0 |
| 1 | 3 | 5.4 ± 1.3² | 6.9 ± 0.3 |
| 2 | 0 | 4.7 ± 0.8 | 5.1 ± 0.2 |
| | 3 | 3.2 ± 0.3³ | 5.4 ± 0.3 |

| | | | |
|---|---|---|---|
| ¹ Mean for 5 cloacal swabs ± standard deviation. ² Significantly (P<0.05) less than the control group on day 3 and significantly (P<0.05) less than the treated group before beginning of treatment on day 0. ³ Significantly (P<0.01) less than the control group on day 3 and significantly (P<0.05) less than the treated group before beginning of treatment on day 0. Analysis by ANOVA. | | | |

**Table 4. Campylobacter counts in cloacal swabs from a group of 7 chickens infected with C. jejuni and treated with an emulsion of 5mM (0.12%) monocaprin and 0.02% PS40 in drinking water and feed for 10 days. A group of 7 untreated chickens was used as control.**

| | Viable bacterial counts (log₁₀ CFU/ml) ¹ | |
|---|---|---|
| Days² | Treated group³ | Control group³ |
| 2 | 4.7 ±. 0.5 ⁴ | 6.8 ± 0.5 |
| 5 | 5.3 ± 0.5 ⁵ | 6.5 ± 0.3 |
| 10 | 5.1 ± 0.6 ⁵ | 6.5 ± 0.7 |

| | | |
|---|---|---|
| ¹Mean ± standard deviation. ² Days following contact between 2 infected and 5 uninfected chickens ³All 7 chickens, 2 inoculated by mouth and 5 infected by contact on day 0, when treatment was started. ⁴Significantly less than the control group (P<0.01). ⁵ Significantly less than the control group (P<0.05). Analysis by ANOVA | | |

### EXAMPLE 5. Reduction in viable Campylobacter counts on naturally contaminated chicken legs by immersion into MC emulsion.

Chicken legs contaminated with *Campylobacter* were obtained immediately after slaughter. They came from a flock of chickens naturally infected in the broilerhouse. They were weighed and divided into 3 groups of 3 legs each. Group 1 was immersed into 1 L of 10 mM (0.24%) MC emulsion with 0.04% PS40 in tap water for 10 min at room temperature, group 2 was immersed into water alone and group 3 was not treated. Each leg was drained for 30 sec, transferred to plastic bags with 20 ml of sterile saline and massaged for 1 min. A sample of the saline was then tested for *Campylobacter* by inoculation of decimal dilutions onto Campy-Cefex plates (Stern, N. J., B. Wojton, and K. Kwiatek.1992. A differential-selective medium and dry ice-generated atmosphere for recovery of Campylobacter jejuni. J. Food Prot. 55:514-517). The plates were incubated for 48 h at 37°C in a gas jar with a microaerobic atmosphere, as previously described. The colonies were then counted and the number of viable *Campylobacter* (log₁₀ colony forming units, CFU) was calculated per gram of leg. Table 5 shows the results from 4 different experiments. There was a considerable variation among the 3 legs in each group, treated simultaneously in the same emulsion. However, an analysis of all 4 experiments by two-way ANOVA showed that there was a significant reduction ( P<0.05) in the number of viable *Campylobacter* on legs treated with MC emulsion compared with legs immersed in tap water and with untreated legs.

**Table 5. Reduction in viable Campylobacter counts on naturally contaminated chicken legs after immersion into an emulsion of MC for 10 min at room temperature.**

| | Number of viable *Campylobacter*¹ (log CFU) per g leg | | |
|---|---|---|---|
| Experiment | MC emulsions ² | Tap water | Untreated |
| 1. | 0.54 ± 0.54 ³ | 1.68 ±1.06 | 2.05 ± 0.43 |
| 2. | 1.50 ± 0.41 | 2.97 ± 0.58 | 2.80 ± 0.13 |
| 3. | 0.37 ± 0.64 | 1.63 ± 0.23 | 1.62 ± 1.22 |
| 4. | 0.80 ± 0.25 | 2.40 ± 0.73 | 2.27 ± 0.25 |

| | | | |
|---|---|---|---|
| ¹ Mean for 3 legs ± standard deviation ² Ten mM (0.24%) monocaprin and 0.04% polysorbate 40 in tap water. ³ A statistical analysis of all 4 experiments by two-way ANOVA showed significantly fewer bacteria on MC treated legs than on untreated legs and on legs rinsed in tap water (P<0.05) | | | |

Treatment of chicken legs artificially contaminated with C. *jejuni* showed similar results, i.e. about 1.5 log₁₀ reduction in CFU after immersion into MC emulsions. Variables like temperature and duration of treatment, concentration and acidity of the emulsions or addition of PS40 did not have a significant effect on the reduction.

### EXAMPLE 6. Reduction in viable Campylobacter counts on contaminated legs of ducks by immersion into MC emulsion.

Legs of Peking ducks naturally contaminated with *Campylobacter* were obtained a few hours after slaughter. They were weighed and divided into 3 groups of 3 legs each. Group 1 was immersed into 1 liter of 10 mM (0.24%) MC emulsion with 0.04% PS40 in tap water for 10 min at room temperature, group 2 was immersed into water alone and group 3 was not treated. Each leg was drained for 30 sec, transferred to a plastic bag with 20 ml of saline and massaged for 1 min. Samples of the saline were inoculated in decimal dilutions onto Campy-Cefex plates. The plates were incubated for 48 h at 37°C, as described. The *Campylobacter* colonies were counted and the number of viable bacteria (log₁₀ colony forming units,CFU) was calculated per gram of leg. Table 6 shows the results of 2 experiments. There was a significant reduction in the number of viable *Campylobacter* on legs treated with MC emulsion compared with tap water treated and untreated legs.

**Table 6. Reduction in Campylobacter counts on fresh duck legs after immersion into an emulsion of MC for 10 min at room temperature.**

| | Number of viable *Campylobacter*¹ (log CFU) per g leg | | |
|---|---|---|---|
| Experiment | MC emulsion ² | Tap water | Untreated |
| 1 | 0.24 ± 0.03 ³ | 1.63 ± 0.27 | 2.03 ± 0.32 |
| 2 | 0.58 ± 0.42 ⁴ | 2.34 ± 0.38 | 2.40 ± 0.28 |

| | | | |
|---|---|---|---|
| ¹ Mean for 3 legs ± standard deviation ² Ten mM (0.24%) monocaprin and 0.04% polysorbate 40 in tap water. ³ Significantly fewer *Campylobacter* than on untreated legs (P<0.01) and on legs rinsed in tap water (P<0.05). Analysis by ANOVA ⁴ Significantly fewer *Campylobacter* than on untreated legs and on legs rinsed in tap water (P<0.05). Analysis by ANOVA | | | |

### EXAMPLE 7. Disinfection of plastic and wooden surface contaminated with Campylobacter by treatment with MC emulsions.

Plastic and wooden cutting boards were divided into 4 equal squares ( 15x10 cm) and each square was contaminated with 1 ml of *Campylobacter-*spiked fluid (juice) from fresh chicken parts, wings or legs. The fluid, which contained tissue remnants, had been thoroughly mixed with a suspension of *Campylobacter* to a concentration of 5.6 ± 0.2 log₁₀ CFU/ml, before being spread over the surface of the cutting board. A 10 mM (0.25%) emulsion of MC and 0.04% PS40 in tap water was added to square one, a 10 mM emulsion of MC and 0.04% PS40 in 1.25% conventional washing-up liquid (WUL) obtained from a supermarket to square 2, 5% WUL in tap water to square 3, and sterile tap water to square 4. Two ml were added to each square, thoroughly mixed with the contaminated fluid and left on for 2 min. The fluid rinse on each square was then wiped off with paper towel ( 25x10 cm) and soaked in 10 ml of sterile saline which was inoculated in decimal dilutions onto Campy-Cefex plates and incubated for 48 h at 37°C in a gas jar with a microaerobic atmosphere. The squares were carefully swabbed with cotton swabs which were vortexed into one ml of saline and inoculated in decimal dilutions onto Campy-Cefex plates, as described. Colonies of *Campylobacter* were counted after 2 days. The results are shown in Table 7. The number of colony forming units (CFU) was significantly reduced (P<0.01) in the rinse fluids from squares 1 and 2 rinsed with MC emulsions, either in water (square 1) or in a 1.25% solution of WUL ( square 2). The number of CFU on cotton swabs from these squares (1b and 2b) was also significantly reduced compared to swabs from squares rinsed with tap water alone, although the rinsing of wooden boards was somewhat less effective (P<0.05) than of plastic boards (P<0.01). Notably, water containing 5% WUL, which contained 5-15% anionic surfactants, did not reduce the *Campylobacter* counts more than tap water.

**Table 7. Disinfection of plastic and wooden cutting boards contaminated with Campylobacter-spiked fluid from fresh chicken parts. Contaminated surfaces were rinsed for 2 min with 1) 10 mM (0.24%) emulsion of monocaprin (MC) in tap water containing 0.04% polysorbate 40 (PS40) (square 1), 2) 10 mM MC and 0.04% PS40 in 1.25% washing-up liquid soap in tap water (square 2), 3) 5% washing-up liquid soap in tap water (square 3) and 4) tap water (square 4).**

| | Number of viable *Campylobacter* (log₁₀ CFU/ml)¹ | |
|---|---|---|
| Square nr. | Plastic board | Wooden board |
| 1a. Rinse fluid (MC and PS40 in water) | 1.13 ± 0.25 ² | 1.95 ± 0.31 ² |
| 1b. Cotton swab | < 1.00 ± NA ³ | 1.45 ± 0.37 ⁴ |
| 2a. Rinse fluid (MC and PS40 in WUL) | 1.38 ± 0.48 ² | 2.35 ± 0.71 ² |
| 2b. Cotton swab | < 1.00 ± NA ³ | 1.55 ± 0.53 ⁴ |
| 3a. Rinse fluid (5% WUL in water) | 5.18 ± 0.38 | 4.50 ± 0.85 |
| 3b. Cotton swab | 4.40 ± 0.39 | 3.50 ±0.66 |
| 4a. Rinse fluid (tap water) | 5.13 ± 0.26 | 4.80 ± 0.52 |
| 4b. Cotton swab | 4.25 ± 0.31 | 3.70 ± 0.54 |

| | | |
|---|---|---|
| ¹Mean of 4 experiments ± standard deviation ²Significant reduction of CFU in MC rinse fluid compared to tap water rinse (P<0.01) ³Significant reduction of CFU in cotton swabs from squares rinsed with MC compared to cotton swabs from squares rinsed with tap water (P<0.01) ⁴Significant reduction of CFU in cotton swabs from squares rinsed with MC compared to cotton swabs from squares rinsed with tap water (P<0.05) | | |

Plastic cutting boards contaminated with juice from chicken parts naturally infected with *Campylobacter* were also effectively disinfected by rinsing with MC emulsions diluted either in tap water or in 1.25% WUL.

### EXAMPLE 8. Anti-campylobacter activities of mixtures of MC emulsions or solutions and commercial washing-up liquid soaps.

Fifteen commercial WULs of various brands were mixed with 200 mM concentrates of MC and 0.8% PS40, in the ratio of 1 part WUL to 4 parts MC emulsion. The WULs varied in their anionic and nonionic contents and 6 of them contained antibacterial ingredients. The mixtures were diluted 16-fold in tap water to a concentration of 10 mM MC and 1.25% WUL and mixed with an equal volume (0.2 ml) of a suspension of *C. jejuni* for one min at room temperature. The number of viable *Campylobacter* was then determined by inoculation of decimal dilutions of the mixtures onto Campy-Cefex plates and incubation in a microaerobic atmosphere, as described. The WULs, without MC, were diluted 20-fold in tap water to a concentration of 5%, mixed with equal volume of *C. jejuni* for 2 min and similarly tested for the number of viable *Campylobacter.* The results are shown in Table 8.

**Table 8. Anti-campylobacter activities of mixtures of MC emulsions and commercial washing-up liquids (WULs) incubated with Campylobacter for one min at room temp. The final concentrations were 5 mM (0.12%) MC, 0.02% PS40 and 1.25% WUL in sterile tap water. WULs (5%) were used as controls and were incubated with Campylobacter for 2 min at room temp.**

| WUL # | | Anionic/nonionic % | Reduction in viable *Campylobacter* counts (log₁₀ CFU) |
|---|---|---|---|
| 1. | MC-WUL mixture ¹ | | 6.5 |
| | WUL control | 5-15 / <5 | 1.1 |
| 2. | MC-WUL mixture ¹ | | >7.2 |
| | WUL control ² | 15-30 / 5-15 | 3.2 |
| 3. | MC-WUL mixture ¹ | | >7.2 |
| | WUL control | 5-15 / <5 | 0.6 |
| 4. | MC-WUL mixture ⁴ | | >6.2 |
| | WUL control | >30 / NI ³ | 1.2 |
| 5. | MC-WUL mixture ¹ | | >7.2 |
| | WUL control | NI / NI | 0.6 |
| 6. | MC-WUL mixture ⁴ | | >6.8 |
| | WUL control | NI / NI | 1.2 |
| 7. | MC-WUL mixture ⁴ | | >6.8 |
| | WUL control | NI / NI | 1.0 |
| 8. | MC-WUL mixture ⁴ | | >6.5 |
| | WUL control | 5-15 / NI | 0.6 |
| 9. | MC-WUL mixture ⁴ | | >6.5 |
| | WUL control | 5-15 / <5 | 0.8 |
| 10. | MC-WUL mixture ⁴ | | >7.1 |
| | WUL control | >30 / <5 | 0.9 |
| 11. | MC-WUL mixture ¹ | | >7.1 |
| | WUL control | 15-30/5-15 | 0.8 |
| 12. | MC-WUL mixture ⁴ | | >7.1 |
| | WUL control ² | >30 / <5 | 1.2 |
| 13. | MC-WUL mixture ⁵ | | >7.1 |
| | WUL control ² | 15-30 / <5 | 0.7 |
| 14. | MC-WUL mixture ⁴ | | >7.1 |
| | WUL control ² | >30 / <5 | 1.4 |
| 15. | MC-WUL mixture ¹ | | >6.2 |
| | WUL control | 5-15% / <5 | 1.1 |

| | | | |
|---|---|---|---|
| ¹ The mixture is cloudy and separates after storage at room temp ² Antibacterial WUL ³ NI: no information. ⁴ The mixture is clear after storage at room temp | | | |

About half of the WULs tested were clear after mixture with MC emulsion and remained clear and active against *Campylobacter* after storage for several weeks at room temp. Other WULs became cloudy after being mixed with MC emulsion and separated into 2 phases upon storage. However, they could be remixed by shaking and were still active against *Campylobacter* after storage for a few weeks. The reason for the difference in solubility of MC in the different brands of WULs is not known and does not seem to depend on their anionic / nonionic contents. One WUL (#2) marketed as antibacterial showed a significant activity against *Campylobacter* upon contact for 2 min but several orders of magnitude less than the mixtures of WUL with MC emulsion. Other WULs marketed as antibacterial (# 12, 13, 14) did not show more activity against *Campylobacter* upon contact for 2 min than non-antibacterial WULs.

Two WULs (no. 6 and 14) were mixed with 200 mM MC emulsions in the ratio of 1:1 and found to be active in a 10-fold dilution in water (final concentration 5mM MC and 2.5% WUL) when mixed with *Campylobacter* for 2 min at room temp, the reduction in viable bacterial counts being >3.5 log₁₀ CFU

In another type of experiment, 1 M and 2.5 M solutions of MC in ethanol were mixed with commercial WULs in the ratio of 1:9, to a final MC concentration of 100mM and 250 mM, respectively, in 90% WUL.The WULs remained clear or slightly cloudy after addition of the MC solution, depending on the WUL brand. The WULs were diluted 10-fold in tap water to concentrations of 10 mM and 25 mM, respectively, and tested against *Campylobacter* for 2 min at room temp, as in the previous experiment. The results are shown in Table 9.

**Table 9. Anti-campylobacter activities of mixtures of MC solutions and commercial washing-up liquids (WULs) incubated with Campylobacter for 2 min at room temp. The final concentrations were 5 mM (0.12%) and 12.5 mM (0.3%) MC, respectively, and 9% WUL in sterile tap water.**

| WUL # | MC conc. mM | Reduction in viable *Campylobacter* counts (log₁₀ CFU) |
|---|---|---|
| 2 | 5 | ≥4.9 |
| 2 | 12.5 | ≥4.9 |
| 3 | 5 | ≥4.9 |
| 3 | 12.5 | ≥4.9 |
| 4 | 5 | 1.1 |
| 4 | 12.5 | 3.5 |
| 6 | 5 | 5.0 |
| 15 | 5 | 2.1 |
| 15 | 12.5 | ≥3.9 |

As shown, all the WULs are active with MC in 12.5 mM concentration and three of them have antibacterial activity with a 5 mM concentration of MC.

### EXAMPLE 9. Treatment with acidified MC emulsions to reduce the number of spoilage bacteria on chicken legs.

Chicken legs were obtained at the processing plant before packaging. One group of legs was dipped into a container with 2 liters of 5 mM (0.12%) MC and 0.02% PS40 in 0.06 M citrate lactate buffer at pH 4.1 and 20°C. After immersion for 5 min the legs were removed from the container, drained for 30 sec and packaged in plastic trays, 3 legs in each tray, which were wrapped in an airtight Cryovac film ( BDF750 Cryovac Europe, Sealed Air Corporation S.A.S.). This is the routine method used by the poultry processing plant for packaging chicken parts for retail distribution. Another group of legs was treated in the same manner in buffer alone and the third group was packaged without treatment. The legs were stored in a cold room at 3 ± 0.5°C. One package from each group was opened on days 0, 2, 4, 7, 10, 14 and 18 and tested for bacterial contamination in the following way: The legs were weighed and transferred to a plastic bag containing 50 ml of sterile distilled water and massaged for 1 minute to release bacteria from the skin into the water. Decimal dilutions of the water were made in sterile saline and examined for aerobic total colony counts (ATC) by streaking in duplicate onto plate count agar ( PC-Agar Oxoid CM 325), 100 µl per plate. The plates were incubated at 17°C for 24 h and then at 7°C for 3 days, after which the colonies were counted. The results from one experiment are shown in Fig. 2. The ATC counts were consistently lower on legs treated with MC emulsion throughout storage compared with either untreated controls or buffer treated controls. After 18 days of storage the difference in bacterial count was approximately 10-fold.

The experiment was repeated 3 times with similar results.

### DISCUSSION AND CONCLUSIONS

It has been determined that it is possible to manufacture concentrated emulsions of monocaprin in water which are surprisingly stable and remain clear after storage at room temperature for at least 12 months. The concentrated emulsions are microbicidal in up to 200-fold dilution in water and reduce the number of viable bacteria, such as *Campylobacter jejuni,* surprisingly fast in water at room temperature, causing at least a 6 log₁₀ reduction in colony forming units (CFU) in 1 min. This is an important aspect of the invention because it is easy to dilute the concentrates in tap water at room temperature without vigorous stirring. Monocaprin emulsions can therefore be manufactured as concentrates and diluted into working emulsions at the time and place of use. The concentrates can be stored for at least 12 months and the diluted emulsions for at least 3 months at room temperature without losing their microbicidal activity.

Unexpectedly, stable concentrated emulsions of monocaprin can be made in water without addition of an emulsifier. However, emulsifiers such as polysorbates can be added to monocaprin emulsions without reducing their stability or microbicidal activity upon dilution. Another aspect of the invention is that concentrated monocaprin emulsions containing a polysorbate are stable after dilution in tap water buffered at a pH of less than 5.5 and preferably In the pH range of 4 to 5, and that concentrated emulsions diluted 160-fold in buffer kill bacteria such as *Salmonella* and *E*. *coli* which are not killed by monocaprin at higher pH.

The examples reported herein show that emulsions of monocaprin in water, with or without emulsifiers, can be utilized in a number of ways. They are active in killing an important foodborne pathogen, namely C. *jejuni,* in drinking water at concentrations which are not harmful to chickens, 12 days and older. It is an important aspect of the invention that a natural compound, monocaprin, classified as GRAS, can be used to disinfect drinking water contaminated with *Campylobacter.* It can also be added to the drinking water and feeds of chickens in concentrations which are not harmful to the animals but cause a reduction in the number of *Campylobacter* in their intestines. Another utilization of the invention is to dip poultry carcasses into monocaprin emulsions to reduce the number of *Campylobacter* on their surface and thereby reduce the risk of transmission of this foodborne bacterium to humans. A similar approach is to use monocaprin emulsions diluted in buffer at low pH to reduce the number of spoilage micro-organisms on the surface of carcasses or parts thereof in order to extend their shelf life. An important use of monocaprin emulsions is in the kitchen where surfaces contaminated with foodborne or other bacteria can be partly or fully disinfected by submersion into monocaprin emulsions diluted in water or in other media. An important aspect of the invention is the finding that concentrated MC emulsions and solutions can be mixed with a variety of commercial liquid soaps to form stable MC-soap mixtures which are highly antibacterial and can be stored at room temp for at least several weeks. This opens the possibility of manufacturing a new type of disinfectant soaps.

## Claims

1. A process for manufacturing a concentrated monocaprin-in-water emulsion comprising heating water to a temperature in the range of 30 to 80°C, adding monocaprin solubilized in ethyl alcohol to the heated water under agitation to make an emulsion with a monocaprin concentration in the range of 50 to 300 mM and that comprises in the range of 1 to 30% (v/v) ethyl alcohol, and cooling the emulsion to ambient temperature at which it forms a homogeneous substantially clear emulsion which remains stable upon storage at room temperature for at least one year.

2. The process according to claim 1 where said water is heated to a temperature in the range of 60 to 80°C.

3. The process according to claim 1 where said water is heated to a temperature in the range of 60 to 70°C.

4. The process according to any of claim 1-3, where the concentration of monocaprin in the obtained emulsion is in the range of 150-300 mM.

5. The process according to claims 1-4, further comprising adding an emulsifying agent to the emulsion.

6. The process according to claim 5 wherein said emulsifying agent is selected from the group of polyoxyethylene sorbitan fatty acid esters (polysorbates) in a concentration range of 0.1 to 5.0% (v/v).

7. A concentrated homogeneous monocaprin-in-water emulsion comprising in the range of 50-300 mM monocaprin and in the range of 1-30% (v/v) ethyl alcohol, obtainable by the process of claim 1.

8. The concentrated monocaprin-in water emulsion of claim 7 further comprising a food-compatible emulsifying agent.

9. The concentrated monocaprin-in water emulsion according to claim 7 where said emulsifying agent is selected from the group of polyoxyethylene sorbitan fatty acid esters (polysorbates) in a concentration range of 0.1 to 5.0% (v/v).

10. The concentrated monocaprin-in-water emulsion according to claim 9 where the emulsifying agent is polysorbate 40.

11. A method for disinfecting drinking water and/or feed contaminated with pathogenic bacteria by adding to the water or feed a stable concentrated monocaprin-in water emulsion having a concentration in the range of 50-300 mM, obtainable with the process of any of claims 1-6 to a concentration which effectively kills the bacteria and is safe for animal consumption.

12. The method of claim 11 wherein said emulsion is added to drinking water to a final concentration in the range of 1-10 mM.

13. The method of claim 11 wherein said emulsion is added to feed to a final concentration corresponding to 5-10 mmol per kg.

14. The method according to claim 11 where said pathogenic bacteria are selected from the group consisting of *Campylobacter* species, *E. coli* and *Salmonella* species.

15. A non-therapeutic method to reduce the number of Campylobacter bacteria in the digestive canal of animals by adding a monocaprin-in water emulsion in the concentration in the range of 50-300 mM, obtainable with the process of any of claims 1-6, to their drinking liquid, and/or to their food or feed in a concentration which effectively kills the bacteria and is safe for animal and human consumption.

16. The non-therapeutic method of claim 15 wherein said emulsion is added to a final concentration in the range of 1-10 mM.

17. The use of a monocaprin emulsion obtainable with the process of any of claims 1-6, in the manufacture of a disinfectant for reducing the number of pathogenic bacteria in the digestive canal of animals by adding said emulsion to their drinking liquid, and/or to their food or feed in a concentration which effectively kills the bacteria and is safe for animal and human consumption.

18. The use of claim 17 wherein said emulsion is added to drinking water to a final concentration in the range of 1-10 mM.

19. The use of claim 17 wherein said emulsion is added to feed to a final concentration corresponding to 5-10 mmol per kg.

20. The use according to claim 17 where said pathogenic bacteria are selected from the group consisting of *Campylobacter* species, *E. coli* and *Salmonella* species.

21. A method for disinfecting a surface contaminated with foodborne pathogenic bacteria with a diluted concentrated emulsion of monocaprin obtainable with the process of any claims 1-6, comprising diluting said concentrated emulsion and applying to said surface contaminated with foodborne pathogenic bacteria by submerging the surface into the microbicidal emulsion or by rinsing it with the emulsion using an appropriate rinsing device, thereby effectively reducing the number of viable bacteria on the contaminated surface.

22. The method according to claim 21 where the contaminated surface is of raw meat, such as raw poultry, being treated either in the slaughterhouse, a kitchen or other food processing site.

23. The method according to claim 21 or 22 where the contamination is caused by bacteria selected from the group consisting of *Campylobacter* species, *Salmonella* species and *E. coli.*

24. The method according to any of claims 21 to 23 where the surface is selected from utensils, cutting boards, sinks, kitchen counters and other surfaces used for food processing and food preparation which are at risk of being contaminated with said foodborne pathogenic bacteria.

25. A method for reducing the number of spoilage bacteria on meat or fish products and extending shelf life of such products comprising applying a diluted concentrated emulsion of monocaprin, obtainable with the process of any of claims 1-6, to the surface of said meat or fish products by immersion into the diluted emulsion or by rinsing with the diluted emulsion using an appropriate rinsing device.

26. The method according to claim 25, wherein said concentrated emulsion is diluted to a monocaprin concentration in the range of 1-10 mM.

## Patentansprüche

1. Verfahren zur Herstellung einer konzentrierten Monocaprin-in-Wasser-Emulsion, bei dem man Wasser auf eine Temperatur im Bereich von 30 bis 80°C erhitzt, in Ethylalkohol solubilisiertes Monocaprin unter Rühren zu dem erhitzten Wasser gibt, um eine Emulsion herzustellen, die eine Monocaprinkonzentration im Bereich von 50 bis 300 mM aufweist und im Bereich von 1 bis 30% (v/v) Ethylalkohol umfasst, und die Emulsion auf Umgebungstemperatur abkühlt, bei welcher sie eine homogene weitgehend klare Emulsion bildet, die bei Lagerung bei Raumtemperatur über einen Zeitraum von mindestens einem Jahr stabil bleibt.

2. Verfahren nach Anspruch 1, bei dem man das Wasser auf eine Temperatur im Bereich von 60 bis 80°C erhitzt.

3. Verfahren nach Anspruch 1, bei dem man das Wasser auf eine Temperatur im Bereich von 60 bis 70°C erhitzt.

4. Verfahren nach einem der Ansprüche 1-3, bei dem die Monocaprinkonzentration in der erhaltenen Emulsion im Bereich von 150-300 mM liegt.

5. Verfahren nach einem der Ansprüche 1-4, bei dem man ferner einen Emulgator zu der Emulsion gibt.

6. Verfahren nach Anspruch 5, bei dem man den Emulgator aus der Gruppe bestehend aus Polyoxyethylensorbitanfettsäureestern (Polysorbaten) in einem Konzentrationsbereich von 0,1 bis 5,0% (v/v) auswählt.

7. Konzentrierte homogene Monocaprin-in-Wasser-Emulsion, umfassend im Bereich von 50-300 mM Monocaprin und im Bereich von 1-30% (v/v) Ethylalkohol, erhältlich nach dem Verfahren gemäß Anspruch 1.

8. Konzentrierte Monocaprin-in-Wasser-Emulsion nach Anspruch 7, ferner umfassend einen nahrungsmittelverträglichen Emulgator.

9. Konzentrierte Monocaprin-in-Wasser-Emulsion nach Anspruch 7, wobei der Emulgator aus der Gruppe bestehend aus Polyoxyethylensorbitanfettsäureestern (Polysorbaten) in einem Konzentrationsbereich von 0,1 bis 5,0% (v/v) ausgewählt ist.

10. Konzentrierte Monocaprin-in-Wasser-Emulsion nach Anspruch 9, wobei es sich bei dem Emulgator um Polysorbat 40 handelt.

11. Verfahren zum Desinfizieren von Trinkwasser und/oder Futter, das mit pathogenen Bakterien kontaminiert ist, durch Versetzen des Wassers oder Futters mit einer stabilen konzentrierten Monocaprin-in-Wasser-Emulsion mit einer Konzentration im Bereich von 50-300 mM, erhältlich nach dem Verfahren gemäß einem der Ansprüche 1-6, bis zu einer Konzentration, die die Bakterien effektiv tötet und für den tierischen Verzehr unbedenklich ist.

12. Verfahren nach Anspruch 11, bei dem man Trinkwasser bis zu einer Endkonzentration im Bereich von 1-10 mM mit der Emulsion versetzt.

13. Verfahren nach Anspruch 11, bei dem man Futter bis zu einer Endkonzentration, die 5-10 mmol pro kg entspricht, mit der Emulsion versetzt.

14. Verfahren nach Anspruch 11, bei dem man die pathogenen Bakterien aus der Gruppe bestehend aus *Campylobacter-*Arten, *E. coli* und *Salmonella*-Arten auswählt.

15. Nichttherapeutisches Verfahren zur Verringerung der Zahl von Campylobacter-Bakterien im Verdauungskanal von Tieren durch Zugabe einer Monocaprin-in-Wasser-Emulsion in einer Konzentration im Bereich von 50-300 mM, erhältlich nach dem Verfahren gemäß einem der Ansprüche 1-6, zu ihrer Trinkflüssigkeit und/oder ihren Nahrungsmitteln bzw. ihrem Futter in einer Konzentration, die die Bakterien effektiv tötet und für den tierischen und menschlichen Verzehr unbedenklich ist.

16. Nichttherapeutisches Verfahren nach Anspruch 15, bei dem man die Emulsion bis zu einer Endkonzentration im Bereich von 1-10 mM zugibt.

17. Verwendung einer nach dem Verfahren gemäß einem der Ansprüche 1-6 erhältlichen Monocaprinemulsion bei der Herstellung eines Desinfektionsmittels zur Verringerung der Zahl von pathogenen Bakterien im Verdauungskanal von Tieren durch Zugabe der Emulsion zu ihrer Trinkflüssigkeit und/oder ihren Nahrungsmitteln bzw. ihrem Futter in einer Konzentration, die die Bakterien effektiv tötet und für den tierischen und menschlichen Verzehr unbedenklich ist.

18. Verwendung nach Anspruch 17, bei der Trinkwasser bis zu einer Endkonzentration im Bereich von 1-10 mM mit der Emulsion versetzt wird.

19. Verwendung nach Anspruch 17, bei der Futter bis zu einer Endkonzentration, die 5-10 mmol pro kg entspricht, mit der Emulsion versetzt wird.

20. Verwendung nach Anspruch 17, bei der die pathogenen Bakterien aus der Gruppe bestehend aus *Campylobacter-*Arten, *E. coli* und *Salmonella*-Arten ausgewählt sind.

21. Verfahren zum Desinfizieren einer mit nahrungsmittelbürtigen pathogenen Bakterien kontaminierten Oberfläche mit einer verdünnten konzentrierten Emulsion von Monocaprin, die nach dem Verfahren gemäß einem der Ansprüche 1-6 erhältlich ist, bei dem man die konzentrierte Emulsion verdünnt und auf eine mit nahrungsmittelbürtigen pathogenen Bakterien kontaminierte Oberfläche aufbringt, indem man die Oberfläche in die mikrobizide Emulsion eintaucht oder sie unter Verwendung einer entsprechenden Spülvorrichtung mit der Emulsion spült, wodurch die Zahl lebensfähiger Bakterien auf der kontaminierten Oberfläche effektiv verringert wird.

22. Verfahren nach Anspruch 21, bei dem es sich bei der kontaminierten Oberfläche um die Oberfläche von rohem Fleisch, wie rohem Geflügel, handelt, die entweder im Schlachthaus, in der Küche oder an einem anderen Nahrungsmittelverarbeitungsort behandelt wird.

23. Verfahren nach Anspruch 21 oder 22, bei dem die Kontamination durch Bakterien aus der Gruppe bestehend aus *Campylobacter-*Arten, *Salmonella-*Arten und *E*. *coli* verursacht wird.

24. Verfahren nach einem der Ansprüche 21 bis 23, bei dem man die Oberfläche aus Utensilien, Schneidbrettern, Spülbecken, Küchenarbeitsplatten und anderen für die Nahrungsmittelverarbeitung und Nahrungsmittelzubereitung verwendeten Oberflächen, bei denen das Risiko einer Kontamination mit den nahrungsmittelbürtigen pathogenen Bakterien besteht, auswählt.

25. Verfahren zur Verringerung der Zahl von Verderbbakterien auf Fleisch- oder Fischprodukten und zur Verlängerung der Haltbarkeit derartiger Produkte, bei dem man auf die Oberfläche der Fleisch- oder Fischprodukte eine verdünnte konzentrierte Emulsion von Monocaprin, die nach dem Verfahren gemäß einem der Ansprüche 1-6 erhältlich ist, aufbringt, indem man sie in die verdünnte Emulsion eintaucht oder sie unter Verwendung einer entsprechenden Spülvorrichtung mit der verdünnten Emulsion spült.

26. Verfahren nach Anspruch 25, bei dem man die konzentrierte Emulsion auf eine Monocaprinkonzentration im Bereich von 1-10 mM verdünnt.

## Revendications

1. Procédé de fabrication d'une émulsion monocaprine-dans-eau concentrée, comprenant le chauffage d'eau jusqu'à une température dans la plage allant de 30 à 80°C, l'addition de monocaprine solubilisée dans de l'alcool éthylique à l'eau chauffée sous agitation pour obtenir une émulsion avec une concentration en monocaprine dans la plage allant de 50 à 300 mM et comprenant dans la plage de 1 à 30% (v/v) d'alcool éthylique, et le refroidissement de l'émulsion jusqu'à température ambiante, à laquelle elle forme une émulsion homogène sensiblement limpide qui reste stable lors d'un stockage à température ambiante pendant au moins un an.

2. Procédé selon la revendication 1, dans lequel ladite eau est chauffée jusqu'à une température dans la plage allant de 60 à 80°C.

3. Procédé selon la revendication 1, dans lequel ladite eau est chauffée jusqu'à une température dans la plage allant de 60 à 70°C.

4. Procédé selon l'une quelconque des revendications 1-3, dans lequel la concentration en monocaprine dans l'émulsion obtenue se trouve dans la plage de 150-300 mM.

5. Procédé selon l'une quelconque des revendications 1-4, comprenant en outre l'addition d'un agent émulsifiant à l'émulsion.

6. Procédé selon la revendication 5, dans lequel ledit agent émulsifiant est choisi dans le groupe constitué par les esters d'acide gras et de sorbitan polyoxyéthylénés (polysorbates), dans une plage de concentration allant de 0,1 à 5,0% (v/v).

7. Emulsion monocaprine-dans-eau homogène concentrée, comprenant de la monocaprine dans la page de 50-300 mM et de l'alcool éthylique dans la plage de 1-30% (v/v), pouvant être obtenue par le procédé selon la revendication 1.

8. Emulsion monocaprine-dans-eau concentrée selon la revendication 7, comprenant en outre un agent émulsifiant compatible sur le plan alimentaire.

9. Emulsion monocaprine-dans-eau concentrée selon la revendication 7, dans laquelle ledit agent émulsifiant est choisi dans le groupe constitué par les esters d'acide gras et de sorbitan polyoxyéthylénés (polysorbates), dans une plage de concentration allant de 0,1 à 5,0% (v/v).

10. Emulsion monocaprine-dans-eau concentrée selon la revendication 9, dans laquelle l'agent émulsifiant est le polysorbate 40.

11. Méthode de désinfection d'eau de boisson et/ou d'aliments pour animaux contaminés par des bactéries pathogènes, par l'addition à l'eau ou aux aliments pour animaux d'une émulsion monocaprine-dans-eau concentrée stable ayant une concentration dans la plage de 50-300 mM, pouvant être obtenue par le procédé selon l'une quelconque des revendications 1-6, à une concentration qui tue de manière efficace les bactéries et ne présente aucun danger pour une consommation par des animaux.

12. Méthode selon la revendication 11, dans laquelle ladite émulsion est ajoutée à l'eau de boisson jusqu'à une concentration finale dans la plage de 1-10 mM.

13. Méthode selon la revendication 11, dans laquelle ladite émulsion est ajoutée à l'aliment pour animaux jusqu'à une concentration finale correspondant à 5-10 mmol par kg.

14. Méthode selon la revendication 11, dans laquelle lesdites bactéries pathogènes sont choisies dans le groupe constitué par les espèces de *Campylobacter, E. coli* et les espèces de *Salmonella.*

15. Méthode non thérapeutique de réduction du nombre de bactéries *Campylobacter* dans le tube digestif d'animaux, par l'addition d'une émulsion monocaprine-dans-eau selon une concentration dans la plage de 50-300 mM, pouvant être obtenue par le procédé selon l'une quelconque des revendications 1-6, à leur eau de boisson et/ou leurs aliments, à une concentration qui tue de manière efficace les bactéries et ne présente aucun danger pour une consommation par des animaux et par l'homme.

16. Méthode non thérapeutique selon la revendication 15, dans laquelle ladite émulsion est ajoutée jusqu'à une concentration finale dans la plage de 1-10 mM.

17. Utilisation d'une émulsion de monocaprine pouvant être obtenue par le procédé selon l'une quelconque des revendications 1-6, pour la fabrication d'un désinfectant destiné à réduire le nombre de bactéries pathogènes dans le tube digestif d'animaux, par l'addition de ladite émulsion à leur eau de boisson et/ou leurs aliments selon une concentration qui tue de manière efficace les bactéries et ne présente aucun danger pour une consommation par des animaux et par l'homme.

18. Utilisation selon la revendication 17, dans laquelle ladite émulsion est ajoutée à l'eau de boisson jusqu'à une concentration finale dans la plage de 1-10 mM.

19. Utilisation selon la revendication 17, dans laquelle ladite émulsion est ajoutée aux aliments pour animaux jusqu'à une concentration finale correspondant à 5-10 mmol par kg.

20. Utilisation selon la revendication 17, dans laquelle lesdites bactéries pathogènes sont choisies dans le groupe constitué par les espèces de *Campylobacter, E. coli* et les espèces de *Salmonella.*

21. Méthode de désinfection d'une surface contaminée par des bactéries pathogènes d'origine alimentaire, par une émulsion de monocaprine concentrée diluée pouvant être obtenue par le procédé selon l'une quelconque des revendications 1-6, comprenant la dilution de ladite émulsion concentrée et l'application à ladite surface contaminée par des bactéries pathogènes d'origine alimentaire en submergeant la surface dans l'émulsion microbicide ou en la rinçant par l'émulsion à l'aide d'un dispositif de rinçage approprié, réduisant ainsi de manière efficace le nombre de bactéries viables sur la surface contaminée.

22. Méthode selon la revendication 21, dans laquelle la surface contaminée est de la viande crue, telle que de la volaille crue, étant traitée dans l'abattoir, une cuisine ou bien tout autre site de transformation des aliments.

23. Méthode selon la revendication 21 ou 22, dans laquelle la contamination est provoquée par des bactéries choisies dans le groupe constitué par les espèces de *Campylobacter,* les espèces de *Salmonella* et *E. coli.*

24. Méthode selon l'une quelconque des revendications 21 à 23, dans laquelle la surface est choisie parmi les ustensiles de cuisine, les planches à découper, les éviers, les plans de travail de cuisine et les autres surfaces utilisées pour la transformation des aliments et la préparation des aliments, qui sont susceptibles d'être contaminées par lesdites bactéries pathogènes d'origine alimentaire.

25. Méthode de réduction du nombre de bactéries de contamination sur des produits de viande ou de poisson et d'extension de la durée de conservation de tels produits, comprenant l'application d'une émulsion de monocaprine concentrée diluée, pouvant être obtenue par le procédé selon l'une quelconque des revendications 1-6, à la surface desdits produits de viande ou de poisson par immersion dans l'émulsion diluée ou par rinçage par l'émulsion diluée à l'aide d'un dispositif de rinçage approprié.

26. Méthode selon la revendication 25, dans laquelle ladite émulsion concentrée est diluée jusqu'à une concentration en monocaprine dans la plage de 1-10 mM.
